# EUROPEAN PATENT APPLICATION

(11) **EP 4 489 257 A2**
(43) Date of publication of application: **08.01.2025**
(21) Application number: 24182534.8
(22) Date of filing: 17.06.2024
(51) Int. Cl.: H02J 7/00

(54) **A CHARGING DEVICE SYSTEM HAVING MAGNETS**

(30) Priority: 28.06.2023 US 202318343229
(71) Applicant: Datalogic IP TECH S.r.l., 40012 Lippo di Calderara di Reno (BO) (IT)
(72) Inventor: PUGLIESE, Francesco, I-40133 Bologna (IT); FRASCOLLA, Giuseppe Pio, I-40124 Bologna (IT); PIFFERI, Marco, I-41018 San Cesario sul Panaro (MO) (IT)
(74) Representative: Porta & Consulenti Associati S.p.A.

(57) **Abstract**

The technology disclosed herein relates to devices, systems, methods, and techniques for charging a battery pack via an external charger. The external charger includes an external charger contact (e.g., a spring contact) for engaging with an external contact receiver of a battery pack. The external charger also includes a plurality of rows of magnets, wherein each magnet aligns with at least one corresponding magnet of the battery pack when the external charger contact engages with the external contact receiver. In embodiments, the external charger can charge the battery pack in a first position and a second position. In embodiments, each row of the plurality of rows of magnets within the battery pack and within the external charger are separated by an equal distance. Based on coupling the battery pack to the external charger via the contacts and magnets, the battery pack can be charged.

## Description

### SUMMARY

A high-level overview of various aspects of the invention is provided here for that reason, to provide an overview of the disclosure and to introduce a selection of concepts that are further described in the detailed-description section below. This summary is not intended to identify key features or essential features of the claimed subject matter, nor is it intended to be used as an aid in isolation to determine the scope of the claimed subject matter. The present disclosure is directed, in part, to technology associated with an enhanced charging device system having magnets, substantially as shown in and/or described in connection with at least one of the figures, and as set forth more completely in the claims.

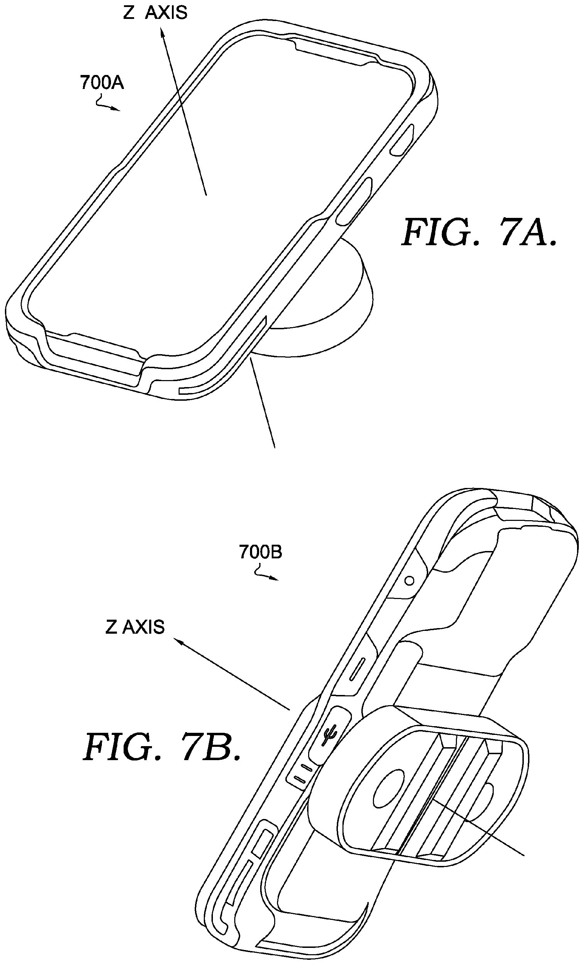

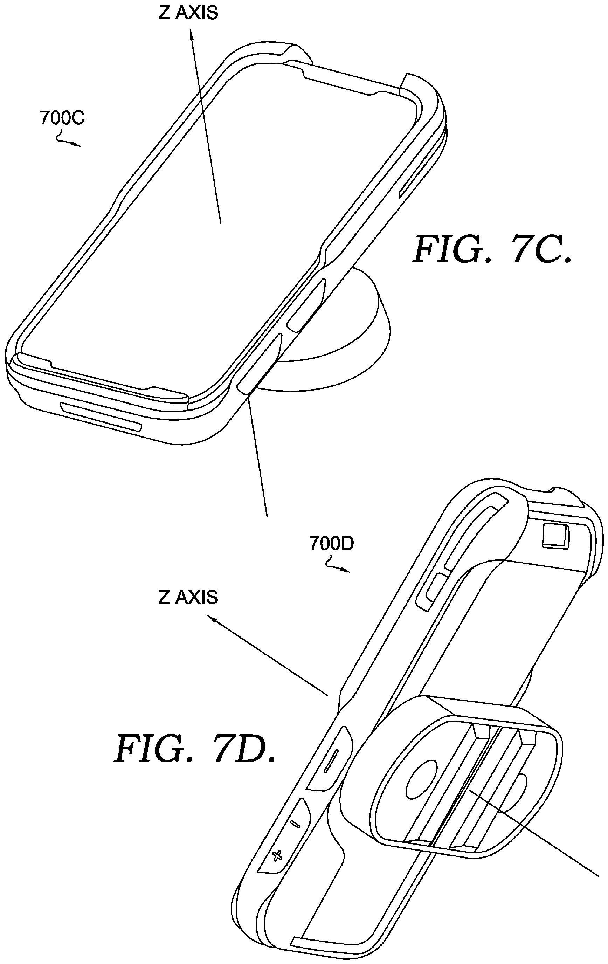

In aspects set forth herein, and at a high level, the technology described herein relates to devices, systems, methods, and techniques associated with a battery pack and an external charger for charging the battery pack. In particular, the present invention relates to a battery pack according to claim 1, and to an external charger according to claim 9. The external charger includes one or more external charger contacts that can engage with one or more external contact receivers of a battery pack to charge the battery pack based on coupling the external charger to the battery pack. Some examples of an external charger contact include a spring contact or a pogo contact. In some embodiments, the battery pack is removable from a user device. As such, the battery pack can be charged while coupled to the user device or when removed from the user device. In embodiments, the external charger is capable of charging the battery pack in a first position and a second position (see, e.g., FIGS. 7A-7D).

The external charger and the battery pack can each include a plurality of rows of magnets. For example, each magnet of the battery pack can align with at least one corresponding magnet (having an opposite polarity) of the external charger for coupling the battery pack to the external charger. In embodiments, each row of the plurality of rows of magnets within the battery pack and within the external charger are separated by an equal distance. In some embodiments, a first row of magnets of the battery pack have a first polarity for alignment with the first row of magnets of the external charger, and the second row of magnets of the battery pack have a second polarity for alignment with the second row of magnets of the external charger, and a third row of magnets of the battery pack have the first polarity for alignment with the third row of magnets of the external charger.

In some embodiments, a first row of the plurality of rows of magnets of the battery pack includes a first magnet adjacent to a first side of the protection circuit board within the battery pack, and a second magnet adjacent to a second side of the protection circuit board within the battery pack. In aspects of this embodiment, the first magnet and the second magnet can have a first polarity for alignment with the external charger. In some embodiments, a first row of the plurality of rows of magnets of the external charger includes a first magnet adjacent to a first side of the protection circuit board within the external charger, and a second magnet adjacent to a second side of the protection circuit board within the external charger. In aspects of this embodiment, the first magnet and the second magnet can have a second polarity for alignment with the first row of magnets of the battery pack.

In some embodiments, the battery pack includes a mechanical guide for coupling the battery pack to the external charger. For example, a surface of the housing of the battery pack may have an opening that exposes the mechanical guide, and the mechanical guide may be below the surface of the housing of the battery pack. In some embodiments, the external charger also includes a mechanical guide for coupling the external charger to the battery pack. For example, a surface of the housing of the external charger may have an opening that exposes the mechanical guide, and the mechanical guide may protrude above the surface of the housing of the external charger. In some embodiments, the housing of the external charger includes plastic material. Notice that it is possible to swap the protrusion and the gorge on sides described above.

Based on coupling the battery pack to the external charger via the contacts and magnets, the battery pack can be charged.

In a further aspect, the present invention relates to a method for charging a battery pack comprising: coupling the battery pack to an external charger, such that an external charger contact of the external charger engages with an external contact receiver of the battery pack; and based on the battery pack being coupled to the external charger, charging the battery pack.

Preferably, a first plurality of rows of magnets within the battery pack align with a second plurality of rows of magnets within the external charger, and each aligned magnet of the battery pack and the external charger have opposite polarities.

Preferably, a first distance between a first row of the first plurality of rows of magnets within the battery pack and a second row of the first plurality of rows of magnets within the battery pack is equal to a second distance between the second row and a third row of the first plurality of rows of magnets within the battery pack.

Preferably, the first row includes a first magnet adjacent to a first side of a protection circuit board within the battery pack and a second magnet adjacent to a second side of the protection circuit board, and the first magnet and the second magnet have a first polarity for alignment with the external charger.

Preferably, a row of magnets within the external charger includes one magnet adjacent to a first side of a printed circuit board within the external charger and another magnet adjacent to a second side of the printed circuit board within the external charger, wherein the row of magnets within the external charger aligns with the first row within the battery pack, and wherein the row of magnets within the external charger have a second polarity for alignment with the battery pack that is opposite of the first polarity.

This summary is provided to introduce a selection of concepts in a simplified form that are further described below in the detailed description. This summary is not intended to identify key features or essential features of the claimed subject matter, nor is it intended to be used in isolation as an aid in determining the scope of the claimed subject matter.

### BRIEF DESCRIPTION OF THE SEVERAL VIEWS OF THE DRAWINGS

Implementations of the present disclosure are described in detail below with reference to the attached drawing figures, wherein:
FIG. 1 illustrates an example external charger having a printed circuit board, charging circuitry, a plurality of rows of magnets, a mechanical guide, external charger contacts, an input port, and housing, in accordance with aspects herein;
FIG. 2 depicts an example internal view of the external charger having a printed circuit board, charging circuitry, a plurality of rows of magnets, a mechanical guide, external charger contacts, and an input port, in accordance with aspects herein;
FIG. 3 illustrates an example external view of the external charger having the mechanical guide and the external charger contacts, in accordance with aspects herein;
FIG. 4A depicts an example external view of a battery pack having a mechanical guide and external contact receivers for the external charger contacts of the external charger of FIG. 3, and FIG. 4B depicts an example internal view of the battery pack having a cell, in accordance with aspects herein;
FIG. 5 depicts an example internal view of the battery pack having a protection circuit board and gauging circuitry, a plurality of rows of magnets, and external contact receivers, in accordance with aspects herein;
FIGS. 6A-6B illustrate example user devices having a removable battery pack, in accordance with aspects herein;
FIGS. 7A-7D illustrate example views of a user device having a battery pack coupled to an external charger, in accordance with aspects herein;
FIGS. 8A-8B illustrate an example cross-section view of a battery pack coupled to an external charger, in accordance with aspects herein;
FIGS. 9A-9B illustrate an example cross-section view of another embodiment of a battery pack coupled to an external charger, in accordance with aspects herein;
FIG. 10A depicts an example embodiment for aligning magnets of an external charger with magnets of a battery pack, in accordance with aspects herein; and
FIG. 11 depicts another example embodiment for aligning magnets of an external charger with magnets of a battery pack, in accordance with aspects herein.

### DETAILED DESCRIPTION

The subject matter of embodiments of the invention is described with specificity herein to meet statutory requirements. However, the description itself is not intended to limit the scope of this patent. Rather, the inventors have contemplated that the claimed subject matter might be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

Throughout this disclosure, words such as "a" and "an," unless otherwise indicated to the contrary, may also include the plural as well as the singular. Thus, for example, the constraint of "a feature" is satisfied where one or more features are present. Furthermore, the term "or" includes the conjunctive, the disjunctive, and both (a or b thus includes either a or b, as well as a and b).

Unless specifically stated otherwise, descriptors such as "first," "second," and "third," for example, are used herein without imputing or otherwise indicating any meaning of priority, physical order, arrangement in a list, or ordering in any way, but are merely used as labels to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name.

Further, the term "some" may refer to "one or more." Additionally, an element in the singular may refer to "one or more." The term "plurality" may refer to "two or more."

The term "combination" (e.g., one or more combinations thereof) may refer to, for example, "at least one of A, B, or C"; "at least one of A, B, and C"; "at least two of A, B, or C" (e.g., AA, AB, AC, BB, BA, BC, CC, CA, CB); "each of A, B, and C"; and may include multiples of A, multiples of B, or multiples of C (e.g., CCABB, ACBB, ABB, etc.). Other combinations may include more or less than three options associated with the A, B, and C examples.

As used herein, the phrase "based on" shall be construed as a reference to an open set of conditions. For example, an example step that is described as "based on X" may be based on both X and additional conditions, without departing from the scope of the present disclosure. In other words, as used herein, the phrase "based on" shall be construed in the same manner as the phrase "based at least in part on."

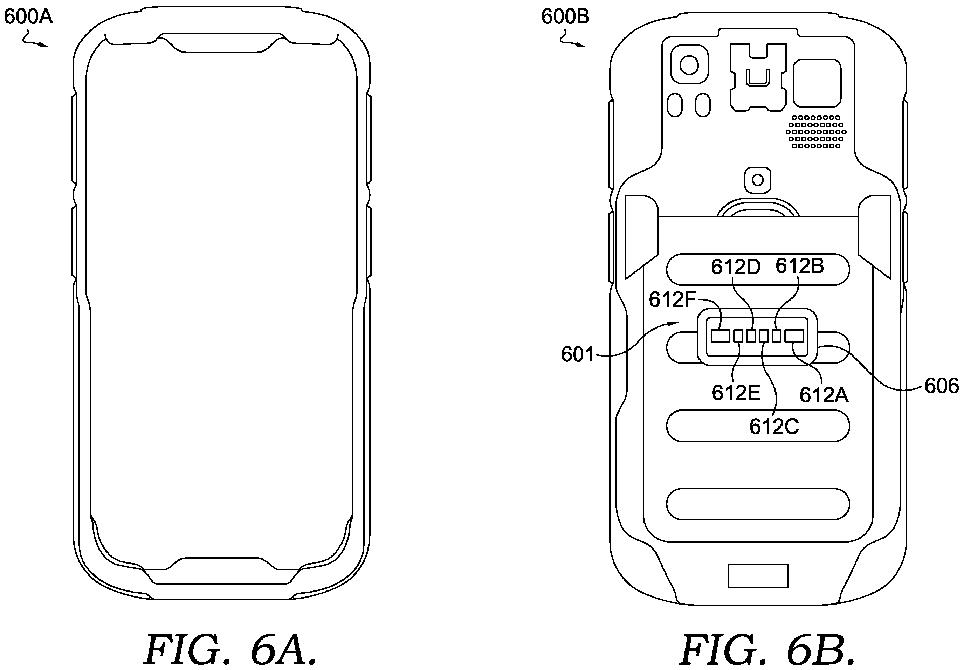

Additionally, a "user device," as used herein, is a device that has the capability of using a wireless communications network, and may also be referred to as a "computing device," "mobile device," "user equipment," "wireless communication device," or "UE." A user device, in some aspects, may take on a variety of forms, such as a PC, a laptop computer, a tablet, a mobile phone, a PDA, a server, a barcode scanner, a barcode reader, a handheld computer barcode reader, a mobile computer barcode reader, or any other device that is capable of communicating with other devices (e.g., by transmitting or receiving a signal) using a wireless communication. A user device may be, in some embodiments, similar to user device 600A of FIG. 6A.

In embodiments, a user device may include internet-of-things devices, such as one or more of the following: a sensor, controller (e.g., a lighting controller, a thermostat), appliances (e.g., a smart refrigerator, a smart air conditioner, a smart alarm system, a smart television), other internet-of things devices, or one or more combinations thereof. Internet-of-things devices may be stationary, mobile, or both (e.g., an electronic vehicle that is stationed in a garage for a week can be stationary for that week, but mobile when driving). In some aspects, the user device is associated with a vehicle (e.g., a video system in a car capable of receiving media content stored by a media device in a house when coupled to the media device via a local area network). In some aspects, the user device comprises a medical device, a location monitor, a clock, other wireless communication devices, or one or more combinations thereof. In some aspects, the user device is a wearable device having a camera, microphone, RFID, GPS, another sensor, or one or more combinations thereof. In some aspects, the user device can capture data in real-time or near real-time (e.g., one or more strings of text, image data, audio data, location data, other types of data, or one or more combinations thereof). In some aspects, the user device may be an E-UTRAN New Radio - Dual Connectivity (ENDC) device.

Embodiments of the technology described herein may be embodied as, among other things, a method, system, or computer-program product. Accordingly, the embodiments may take the form of a hardware embodiment, or an embodiment combining software and hardware. An embodiment that takes the form of a computer-program product can include computer-useable instructions embodied on one or more computer-readable media.

Computer-readable media include both volatile and nonvolatile media, removable and non-removable media, and contemplate media readable by a database, a switch, and various other network devices. By way of example, and not limitation, computer-readable media comprise computer-storage media and communications media. Computer-storage media, or machine-readable media, may include media implemented in any method or technology for storing information. Examples of stored information include computer-useable instructions, data structures, program modules, and other data representations. Computer-storage media include, but are not limited to RAM, ROM, EEPROM, flash memory or other memory technology, CD-ROM, digital versatile discs (DVD), holographic media or other optical disc storage, magnetic cassettes, magnetic tape, magnetic disk storage, and other magnetic storage devices. These memory components can store data momentarily, temporarily, or permanently.

Communications media can store computer-useable instructions-including data structures and program modules-in a modulated data signal (e.g., a modulated data signal referring to a propagated signal that has one or more of its characteristics set or changed to encode information in the signal). Communications media include any information-delivery media. By way of example but not limitation, communications media may include wired media, such as a wired network or direct-wired connection, and wireless media such as acoustic, infrared, radio, microwave, spread-spectrum, and other wireless media technologies. Combinations of the above are included within the scope of computer-readable media.

By way of background, prior relevant technologies have had drawbacks associated with configuring electronic devices to chargers, as well as drawback associated with charging (e.g., based on the configuring). For example, prior relevant technologies have had drawbacks with respect to efficient form factors, limitations associated with magnet field strength during contact between the charger and battery of the system, limitations associated with magnetic strength for attachment, and so forth. To illustrate, applying additional current when charging a user device causes temperature increases (e.g., Joule heating due to hR losses as current flows through the internal resistance of the battery being charged or discharged) to the user device and to components within the user device. Increases to the number of the battery discharge and charge cycles can also reduce capacity (e.g., capacity degradation for battery operations temperatures). For example, a lithium battery having particular material(s) or a particular composition cannot exceed 45 °C and other lithium batteries having particular material(s) or composition cannot exceed 60 °C based on the heat sources from the battery being charged in these prior relevant technologies.

The technology provided herein provides various improvements to these drawbacks. For example, the technology disclosed herein mitigates or reduces overheating of the user device, components of the user device, the external charger or battery pack, components of the external charger, or one or more combinations thereof, (e.g., by moving the charger circuitry out of the user device, via the external charger contacts of the external charger engaging with the external contact receivers of the battery pack, and/or the magnet positioning between the external charger and the battery pack discussed herein). To illustrate, in embodiments, the positioning of the contacts, magnets, and the mechanical guides can facilitate proper placement of the external charger when coupled to the battery pack for ease in the coupling of the system without disruption of components and without increasing the temperature of the user device or user device components when charging the battery pack. In addition, the positioning of the magnets or contacts and moving the charger circuitry out of the user device can also provide for fast and efficient charging of the battery pack without reducing or degrading capacity.

For example, the magnets (and the positioning thereof) can indirectly reduce the overheating of the user device, user device components, and external charger by providing an improved and enhanced coupling with contacts corresponding to the battery pack and external charger due to a strong, tight contact engagement, thereby reducing contacts series resistance, and thus reducing Joule losses. By moving the battery charging operation from the circuitry of the user device itself to a circuitry external from the user device itself, independent from the user device circuitry and present into an external charging device, the technology disclosed herein reduces or prevents overheating of the user device (and user device components) and the battery pack. For example, the external contacts of the battery pack are accessible and external to the user device itself, and the external contacts of the external charging device are also external to the external charging device. In this way, the charger circuitry is external from the user device, thereby confining or restricting the heat caused by charger circuitry to an area external to the user device, and thus avoiding or preventing temperature increases to the battery pack. As such, the internal circuitry of the user device is not heated during the charging of the battery pack via the external charging device, because the external battery contacts apply the charge directly on the battery cell, and thus results in bypassing all charging circuitry located inside the user device. In some embodiments, the internal charging circuity can still be used in other circumstances.

One embodiment of the present technology includes a battery pack comprising: one or more cells, a protection circuit board, gauging circuitry, an external contact receiver for receiving an external charger contact of an external charger, a plurality of rows of magnets, and a housing for supporting the one or more cells, the protection circuit board, the external contact receiver, and the plurality of rows of magnets, wherein a first surface of the housing is capable of being coupled to the external charger. Each of the plurality of rows of magnets can align with at least one corresponding magnet of the external charger when the external charger contact engages with the external contact receiver, and wherein the aligned magnets of the battery pack and the external charger have opposite polarities.

Another embodiment of the present technology includes an external charger comprising an input port for receiving an input voltage, a printed circuit board, charging circuitry, an external charger contact for engaging with an external contact receiver of a battery pack, a plurality of rows of magnets, and a housing for supporting the input port, the protection circuit board, the external charger contact, and the plurality of rows of magnets, wherein the plurality of rows of magnets are closer than the protection circuit board to a first surface of the housing. The plurality of rows of magnets may each align with at least one corresponding magnet of the battery pack when the external charger contact engages with the external contact receiver, wherein the aligned magnets of the external charger and the battery pack have opposite polarities.

In another embodiment, a method for charging a user device comprises coupling a battery pack to an external charger, such that an external charger contact of the external charger engages with an external contact receiver of the battery pack, and such that a first plurality of rows of magnets within the battery pack align with a second plurality of rows of magnets within the external charger, and wherein each aligned magnet of the battery pack and the external charger have opposite polarities. The method also comprises charging the battery pack based on the battery pack being coupled to the external charger. In this way, the method for charging the user device (e.g., a PC, a laptop computer, a tablet, a mobile phone, a PDA, a server, a barcode scanner, a barcode reader, a handheld computer barcode reader, a mobile computer barcode reader, or any other device that is capable of communicating with other devices (e.g., by transmitting or receiving a signal) using a wireless communication) is capable of charging the user device without using the device circuitry that is internal to the user device, thereby avoiding overheating of the user device circuitry during the battery pack charging via the external charging device.

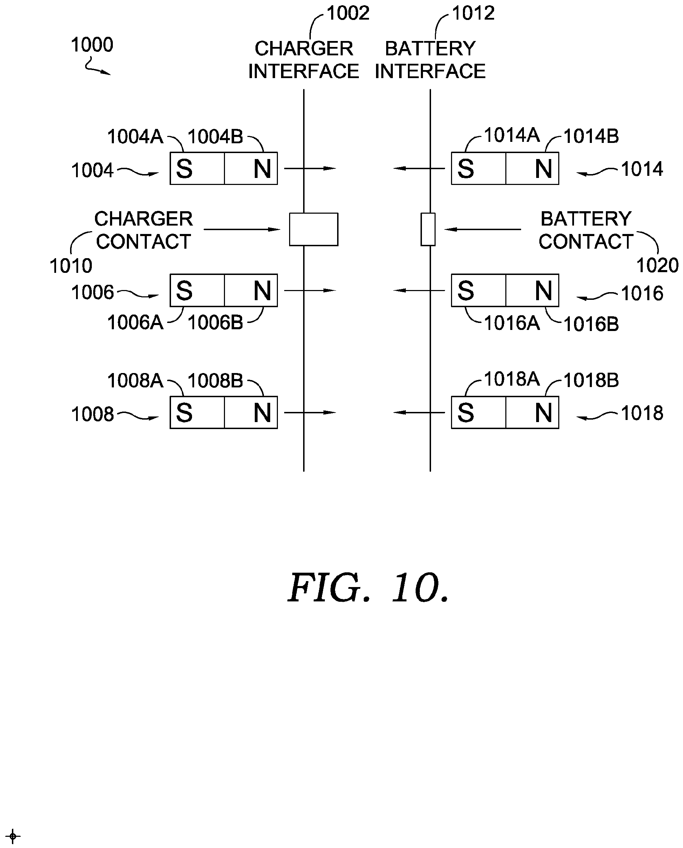

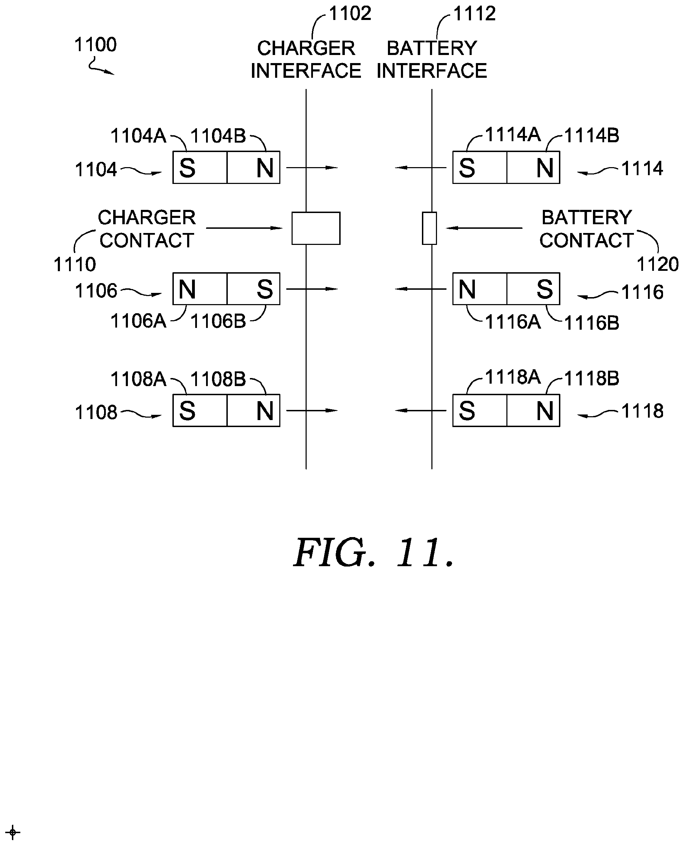

In yet another embodiment, one or more computer storage memory of the external charger may cause one or more processors of the external charger to perform a method for charging the battery pack. For example, the computer storage memory may have computer-readable instructions stored thereon that, when executed by one or more processors, perform the method including determining that the battery pack has been coupled to the external charger based on one or more external contact receivers of the external charger, wherein the battery pack has been coupled to the external charger via the magnets of the external charger and battery pack (e.g., such as in embodiments illustrated in FIGS. 10 or 11). Based on determining the battery pack is coupled to the external charger, the one or more processors may cause the external charger to charge the battery pack.

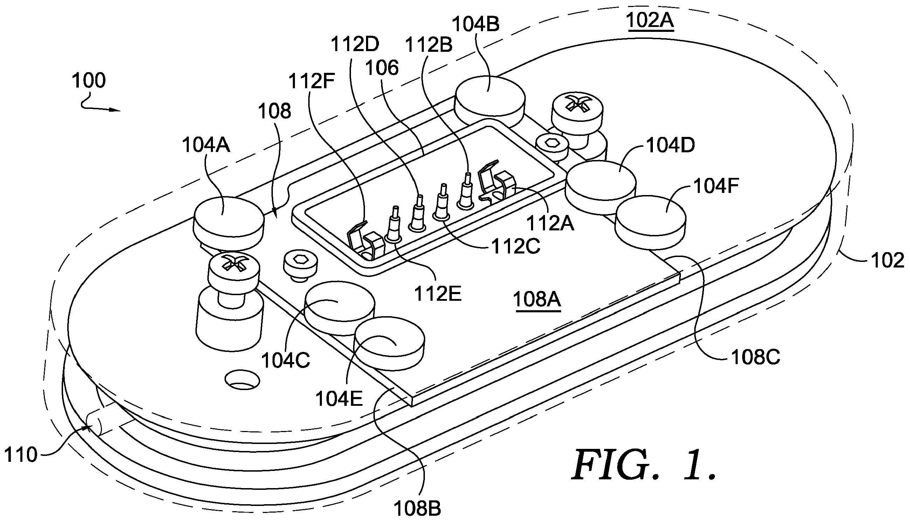

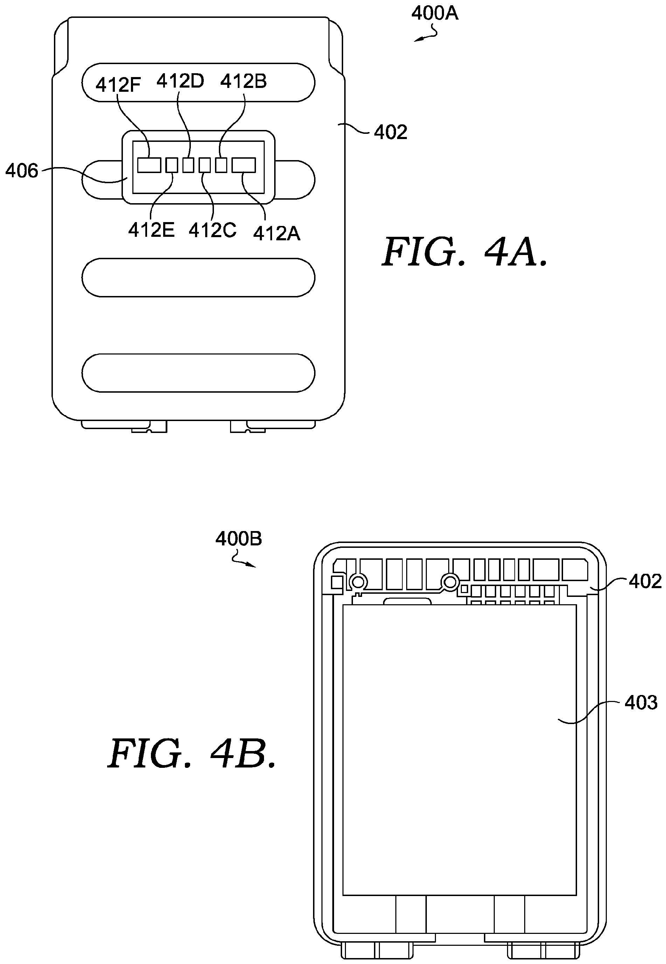

Turning now to FIG. 1, example external charger 100 supports an improved charging device for improved charging of a battery pack (e.g., battery pack 400A and 400B of FIGS. 4A-4B), in accordance with one or more embodiments disclosed herein. Example external charger 100 is but one example of a suitable external charger for the associated techniques disclosed herein, and is not intended to suggest requisite limitations as to the scope of use or functionality of the invention. Neither should the external charger 100 be interpreted as having a particular dependency or requirement relating to any one or combination of components illustrated.

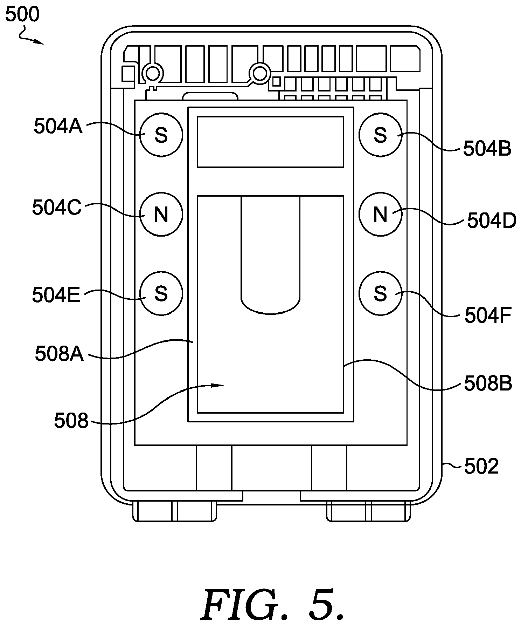

Example external charger 100 comprises housing 102, housing surface 102A for coupling the external charger to the battery pack (e.g., battery pack 500 of FIG. 5), magnets 104A-104F, mechanical guide 106, printed circuit board 108 having a first surface 108A and sides 108B - 108C, input port 110, and external charger contacts 112A-112F. As noted above, example external charger 100 is one example of a suitable external charger. For example, in some embodiments, the example external charger 100 can include more or less of the external charger contacts 112A-112F for charging the battery pack. As another example, in some embodiments, the example external charger 100 can include rows of magnets in addition to the magnets 104A-104F. In embodiments, to enable power transfer between the external charging device and the battery pack, their respective metal terminations are in direct contact. In this example, a certain amount of pressure can be applied between these respective metal terminations to guarantee the current flow. For example, the pressure between the user device and the external charger 100 can be applied in different ways, one of which is based on the magnets 104A-104. Alternatively, in other embodiments, a mechanical locking system between the external charger 100 and the user device can establish these respective metal terminations to guarantee the current flow (e.g., a mechanical interlock system or by exploiting the user device weight to apply the pressure between the user device and the external charger 100).

Housing 102 has a first housing surface 102A associated with coupling the external charger to the battery pack (see, e.g., FIGS. 7A-7D). As illustrated in FIG. 1, the housing 102 supports the magnets 104A-104F, the mechanical guide 106, the printed circuit board 108 with charging circuitry, the input port 110, and the external charger contacts 112A-112F. Further, as illustrated in FIG. 1, the magnets 104A-104F are positioned closer than the printed circuit board 108 (and closer than the first surface 108A of the printed circuit board 108) to the housing surface 102A. In some embodiments, the housing 102 of example external charger 100 is a plastic material or includes plastic material. For example, in some embodiments, the plastic material may include one or more of polycarbonate, polyvinyl chloride, acrylonitrile butadiene styrene, polyethylene terephthalate, thermoplastic elastomers, another type of plastic, or one or more combinations thereof.

In some embodiments, the first housing surface 102A of the housing 102 includes one or more sensors (e.g., a thermal sensor, a pressure sensor, an infrared sensor) for detecting an adjacent object or the presence of the battery pack at the first housing surface 102A. In embodiments, the first housing surface 102A of the housing 102 is a planer outer surface. In other embodiments, the first housing surface 102A includes one or more of concave shapes, convex shapes, another type of shape, or one or more combinations thereof. In some embodiments, the first housing surface 102A includes different material than another portion of the housing 102. In some embodiments, one or more portions of the first housing surface 102A include one or more materials, such as plastic, glass, ceramic, fiber composites, metal, another type of material, or one or more combinations thereof. In some embodiments, one or more portions of the housing 102 include one or more materials, such as plastic, glass, ceramic, fiber composites, metal, another type of material, or one or more combinations thereof.

In some embodiments, the first housing surface 102A of the housing 102 has an opening that exposes the mechanical guide 106. For example, as illustrated in FIG. 1, the mechanical guide 106 is protruding above the first housing surface 102A of the housing 102. In embodiments, the mechanical guide 106 facilitates the coupling and the alignment of the external charger 100 to the battery pack and facilitates the positioning of the external charger on the battery pack. The mechanical guide 106 can also facilitate engagement of the external charger contacts 112A-112F of the external charger 100 to the external contact receivers of the battery pack (e.g., external contact receivers 412A-412F of FIG. 4A). In some embodiments, the mechanical guide 106 is made of the same material as the housing 102. In some embodiments, the mechanical guide 106, or a portion thereof, includes one or more different materials (e.g., a different type of plastic) than the housing 102 or a portion of the housing 102.

In some embodiments, one side of the mechanical guide 106 protrudes at a greater height above the first housing surface 102A than another side of the mechanical guide 106. In some embodiments, each side of the mechanical guide 106 protrudes at the same height above the first housing surface 102A as each of the other sides of the mechanical guide 106. In some embodiments, one side of the mechanical guide 106, or a portion thereof, is a different material than another side of the mechanical guide 106. In embodiments, the mechanical guide 106 extends to a bottom floor from which the external charger contacts 112A-112F are anchored. In some embodiments, the mechanical guide 106 has a different shape than the shape depicted in FIG. 1 (e.g., a triangle or a square).

In some embodiments, the first housing surface 102A of the housing 102 has an opening that exposes the plurality of external charger contacts 112A-112F for engaging with the external contact receivers of the battery pack (e.g., external contact receivers 612A-612F of FIG. 6B). In other embodiments, the external charger 100 can include more or less of the external charger contacts 112A-112F. In some embodiments, external charger contacts 112A and 112F are spring contacts and external charger contacts 112B -112E are pogo contacts. In other embodiments, one or more of the contacts 112A-112F (or another contact) is a pin contact for engagement with a hole contact of the battery pack. In some embodiments, one or more of the contacts 112A-112F (or another contact) is a blade contact for engagement with a corresponding contact of the battery pack. In some embodiments, one or more of the contacts 112A-112F (or another contact) is another type of contact.

In some embodiments, the distance between external charger contacts 112A and 112B is the same distance between: external charger contacts 112B and 112C, external charger contacts 112C and 112D, external charger contacts 112D and 112E, and external charger contacts 112E and 112F. Stated different, each of the plurality of external charger contacts 112A-112F may have an equal distance with at least one other external charger contact of the plurality of external charger contacts. In some embodiments, external charger 100 has an additional external charger contact that is at a distance from at least one of the external charger contacts 112A-112F that is the same distance as the distance between external charger contacts 112A and 112B. In some embodiments, the distance between external charger contacts 112A and 112C is the same distance between external charger contacts 112B and 112D. In some embodiments, the distance between external charger contacts 112A and 112D is the same distance between external charger contacts 112F and 112C.

In some embodiments, one or more of the plurality of external charger contacts 112A-112F protrude above the first housing surface 102A via the opening of the first housing surface 102A exposing the plurality of external charger contacts 112A-112F. In some embodiments, when the magnets 104A-104F, mechanical guide 106, and the plurality of external charger contacts 112A-112F are engaged with the magnets, mechanical guide, and the external contact receivers of the battery pack, the system can facilitate a locking mechanism between the external charger 100 and the battery pack that provides for a distance between the electronics of the external charger 100 and the battery pack (e.g., the cell 403 of battery pack 400B in FIG. 4B, the printed circuit board 108, the protection circuit board 508 of battery pack 500 in FIG. 5), such that overheating of the external charger 100 or battery pack is minimized or mitigated. Additionally, the positioning of the plurality of external charger contacts 112A-112F and the mechanical guide 106 can facilitate proper and efficient placement of the external charger 100 when coupled to the battery pack.

In some embodiments, the housing 102 also supports a coil and control electronics for charging the wireless battery pack. In some embodiments, the control electronics can receive power via the input port 110 (e.g., via a tethered cable, battery, or another power source), such that the received power is used to generate a current in the transmission coil of wireless charging circuitry for charging the battery pack (e.g., battery pack 400A-400B of FIGS. 4A-4B). In some embodiments, the current generates a time-varying magnetic field for inducing a current of a coil within the user device (e.g., user device 600A of FIG. 6A). In some embodiments, the time-varying magnetic field can be a modulated magnetic field for conveying data, power, or one or more combinations thereof, between the user device and the external charger 100. As such, in some embodiments, the external charger 100 can receive data via the input port 110, receive power via the input port 110, transfer power (e.g., via the current to the coil of the user device), transfer data (e.g., via the time-varying magnetic field), or one or more combinations thereof. In some embodiments, the input port 110 is a universal serial bus (USB) port (e.g., Type-A, Type-B, Type-C, another type). In some embodiments, the input port 110 is a Thunderbolt port, an Ethernet port, or another type of port.

As illustrated in FIG. 1, the printed circuit board 108 has the first surface 108A that is at a further distance than the magnets 104A-104F to the housing surface 102A. Additionally, the mechanical guide 106 and the external charger contacts 112A-112F are at a closer distance to the housing surface 102A than the surface 108A of the printed circuit board 108. In embodiments, the external charger 100 has a plurality of printed circuit boards 108. In some embodiments, the printed circuit board 108 can perform operations to protect the external charger 100 from overcharging the battery pack, over-discharging, providing too much current, short-circuiting, or one or more combinations thereof. In some embodiments, the printed circuit board 108 can perform operations including firmware updates, connection to a network, other charging operations, pairing operations, or one or more combinations thereof. In some embodiments, the printed circuit board 108 may include, charging circuitry (as charger IC or DC-DC converter as well), a thermal sensor, a moisture sensor, a voltage sensor, a current sensor, a MOSFET, a fuse, a capacitor, a diode, a microcontroller, another type of circuit board component, or one or more combinations thereof.

In some embodiments, the external charger 100 has a plurality of rows of the magnets 104A-104F. For example, the external charger 100 may have a first row of the plurality of rows that includes magnets 104A and 104B. Continuing the example, a second row of the plurality of rows can include magnets 104C and 104D. In addition, a third row of the plurality of rows can include magnets 104E and 104F. In some embodiments, the external charger 100 has one or more additional rows of magnets. In some embodiments, each of the magnets 104A-104F aligns with at least one corresponding magnet of the battery pack (e.g., when each of the external charger contacts 112A-112F engages with the external contact receivers of the battery pack, when the external charger 100 is coupled to the battery pack). In embodiments, a surface of each of the magnets 104A-104F that is closer to the housing surface 102A than the printed circuit board surface 108A has an opposite polarity of each respective surface of the corresponding aligned magnets of the battery pack.

In some embodiments, the first row of magnets including magnets 104A and 104B each has a first polarity at the surface that is closer to the housing surface 102A than the printed circuit board surface 108A. Continuing the example, the surfaces of the two magnets of the battery pack, which align with the surfaces of magnets 104A and 104B having the first polarity, each has a second polarity that is the opposite polarity of the first polarity. In some embodiments, the second row of magnets including magnets 104C and 104D each has the first polarity at the surface that is closer to the housing surface 102A than the printed circuit board surface 108A. In other embodiments, the second row of magnets including magnets 104C and 104D each has the second polarity at the surface that is closer to the housing surface 102A than the printed circuit board surface 108A. In this example, the magnet surfaces of the battery pack that align with the surfaces of magnets 104C and 104D have the first polarity. Stated differently, the aligned magnets of the external charger and the battery pack have opposite polarities for the alignment. In this way, the polarities of the magnets of the external charger 100 and the polarities of the magnets of the battery pack can alternate to allow correct alignment between the external charger 100 and the battery pack (e.g., battery pack 400A), and also between the external charger 100 and the user device (e.g., user device 600A).

In embodiments, a distance between the first row of magnets 104A and 104B and the second row of magnets 104C and 104D is equal to the distance between the second row of magnets 104C and 104D and the third row of magnets 104E and 104F. In embodiments, the first row of magnets 104A and 104B includes the first magnet 104A that is adjacent to a first side 108B of the printed circuit board 108 and the second magnet 104B that is adjacent to a second side 108C of the printed circuit board 108. In embodiments, the second row includes a third magnet 104C that is adjacent to the first side 108B of the printed circuit board 108 and a fourth magnet 104D that is adjacent to the second side 108C of the printed circuit board 108. In some embodiments, the third magnet 104C and the fourth magnet 104D have a second polarity that is opposite of the first polarity of the first magnet 104A and the second magnet 104B.

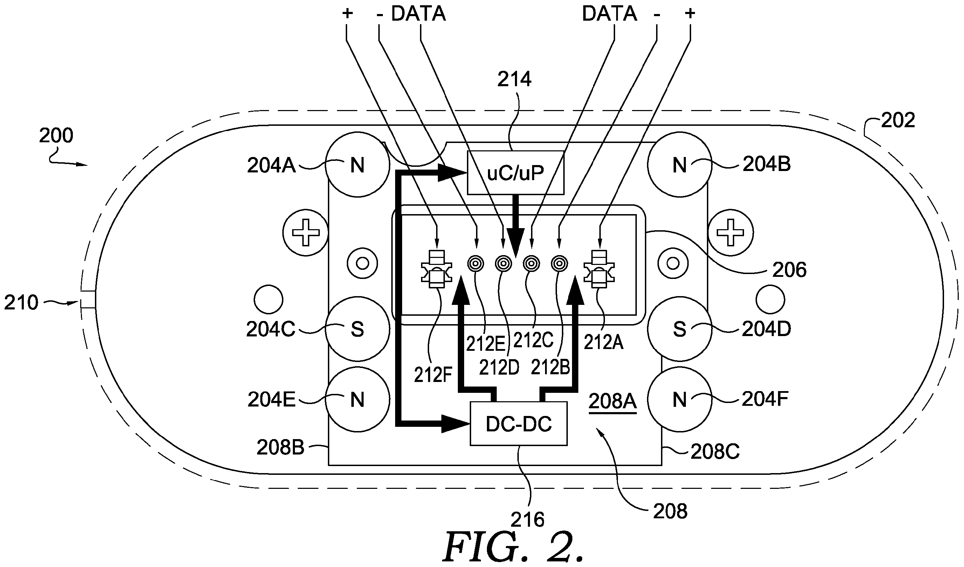

FIG. 2 illustrates an example internal view of the external charger 200. Example external charger 200 is but one example of a suitable external charger for the associated techniques disclosed herein, and is not intended to suggest requisite limitations as to the scope of use or functionality of the invention. Neither should the external charger 200 be interpreted as having a particular dependency or requirement relating to any one or combination of components illustrated.

Example external charger 200 comprises housing 202, magnets 204A-204F, mechanical guide 206, printed circuit board 208 having a first surface 208A, which faces the magnets 204A-204F, and sides 208B-208C, input port 210, and external charger contacts 212A-212F. As noted above, example external charger 200 is one example of a suitable external charger. For example, in some embodiments, the example external charger 200 can include a plurality of printed circuit boards 208. As another example, in some embodiments, the example external charger 200 can include other magnets in addition to the magnets 204A-204F.

As illustrated in FIG. 2, the housing 202 supports the magnets 204A-204F, the mechanical guide 206, the printed circuit board 208, the input port 210, the external charger contacts 212A-212F, and circuitry including the uC/uP 214 and the DC-DC 216. Further, as illustrated in FIG. 2, the magnets 204A-204F are closer than the printed circuit board 208 (and closer than the first surface 208A of the printed circuit board 108) to the portion of the housing 202 that can be coupled to the battery pack. In embodiments, a first row of magnets 204A and 204B have a first polarity, the second row of magnets 204C and 204D have a second polarity, and the third row of magnets 204E and 204F have the first polarity. In other embodiments, the external charger 200 can have a fourth row of magnets that has the second polarity. Continuing this example, in some embodiments, the external charger 200 can have a fifth row of magnets that has the first polarity. The magnets 204A-204F of the external charger and the corresponding battery pack magnets, for alignment, have opposite polarities to increase alignment and avoid incorrect placement between the external charger 200 and the battery pack.

As illustrated in FIG. 2, the magnets 204A-204F are circular in shape. In other embodiments, one or more of the magnets may have a different shape. In some embodiments, one or more of the magnets 204A-204F include a neodymium magnet, a ferrite magnet, another type of magnet, or one or more combinations thereof. In embodiments, the distance between the first row of magnets 204A and 204B and the second row of magnets 204C and 204D is equal to the distance between the second row of magnets 204C and 204D and the third row of magnets 204E and 204F. Stated differently, the distance between magnets 204A and 204C is equal to the distance between magnets 204B and 204D. In addition, in some embodiments, the distance between magnets 204C and 204E is equal to the distance between magnets 204D and 204F.

In embodiments, the first magnet 204A is adjacent to a first side 208B of the printed circuit board 208, and the second magnet 204B is adjacent to the second side 208C of the printed circuit board 208. In embodiments, the third magnet 204C is adjacent to the first side 208B of the printed circuit board 208 and a fourth magnet 204D is adjacent to the second side 208C of the printed circuit board 208. In embodiments, the fifth magnet 204E is adjacent to the first side 208B of the printed circuit board 208 and the fifth magnet 204F is adjacent to the second side 208C of the printed circuit board 208.

In embodiments, a portion of magnets 204D and 204F are directly above the surface 208A of the printed circuit board 208, with the magnets 204D and 204F being closer than the printed circuit board 208 to the portion of the housing 202 that can be coupled to the battery pack. In some embodiments, a substantial portion of magnets 204A-204C and 204E are directly above the surface 208A of the printed circuit board 208, such that a larger portion of the total portion of each of the magnets 204A-204C and 204E are directly above the surface 208A compared to the smaller portion of the total portion of the magnets 204A-204C and 204E that are not directly above the printed circuit board 208. Stated differently, in some embodiments, the length of the printed circuit board 208 between the sides 208B and 208C do not extend beyond the diameter of each of the magnets 204A-204F.

In some embodiments, the housing 202 has an opening that exposes the plurality of external charger contacts 212A-212F, which are capable of engaging with the external contact receivers of the battery pack (e.g., external contact receivers 612A-612F of FIG. 6B). In other embodiments, the external charger 200 can include more or less of the external charger contacts 212A-212F. In some embodiments, the external charger contacts 212A and 212F are spring contacts having a positive polarity, the external charger contacts 212B and 212E are pogo contacts having a negative polarity, and the external charger contacts 212C and 212D are pogo contacts for data communications with the battery pack or the user device. In some embodiments, external charger contacts 212A-212F correspond to an inter-integrated circuit protocol for communications over a bus or a one wire protocol for a data communication (e.g., associated with the thermal sensors of the printed circuit board 208).

In some embodiments, the distance between external charger contacts 212B and 212C is the same distance between external charger contacts 212C and 212D. Stated different, in some embodiments, each of the pogo contacts 212B-212E may have an equal distance with at least one other pogo contact. In some embodiments, the distance between external charger contacts 212A and 212B is the same distance between external charger contacts 212E and 212F. In some embodiments, the external charger contacts 212A and 212F that are spring contacts having the positive polarity are capable of engaging with respective external contact receivers of the battery pack having positive polarity. In some embodiments, the external charger contacts 212B and 212E that are pogo contacts having the negative polarity are capable of engaging with respective external contact receivers of the battery pack having negative polarity. For example, the plurality of external charger contacts 212A-212F, when engaged with the external contact receivers of the battery pack, can facilitate a locking mechanism with the battery pack that provides while protecting the electronics of the external charger 200 and the battery pack to prevent overheating (e.g., caused by the DC-DC 216) of the external charger 200 or battery pack. For example, the particular arrangements of the external charger 200 provide for a bypass of the circuitry of the user device (e.g., the barcode reader, the mobile computing barcode reader). Additionally, the plurality of external charger contacts 212A-212F, when engaged with the external contact receivers of the battery pack, can facilitate proper and efficient placement of the external charger 200 when coupled to the battery pack for enhanced, safe and efficient charging of the battery pack.

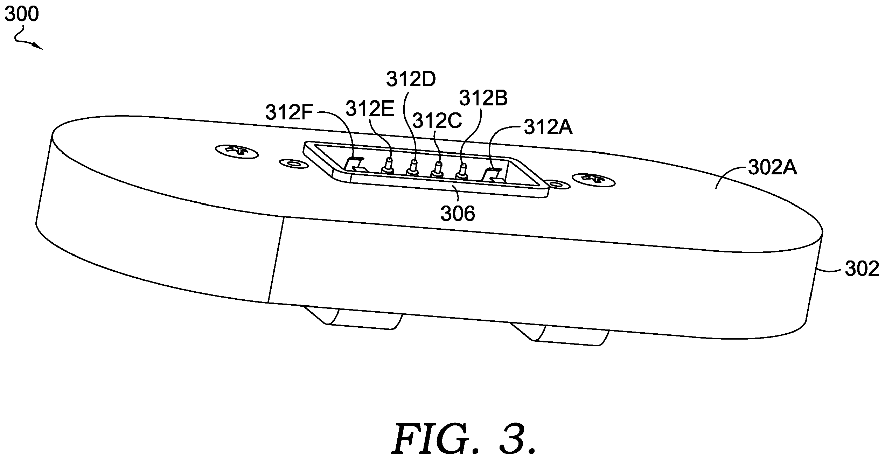

FIG. 3 depicts external charger 300 comprising housing 302, housing surface 302A, mechanical guide 306, and external charger contacts 312A-312F. Example external charger 300 is one example of a suitable external charger. For example, in some embodiments, the example external charger 300 can include different types of external charger contacts 312A-312F. As another example, in some embodiments, the example external charger 300 can include more or less of the external charger contacts 312A-312F.

The mechanical guide 306 of example external charger 300 protrudes above the housing surface 302A for guiding the external charger 300 for coupling to the battery pack. For example, the mechanical guide 306 may, in some embodiments, engage with a recessed mechanical guide of the battery pack for coupling the external charger 300 to the battery pack. In some embodiments, the external charger contacts 312A-312F are positioned below the mechanical guide 306. In some embodiments, external charger contacts 312A-312F are positioned at the same level as the mechanical guide 306, wherein both the mechanical guide 306 and the external charger contacts 312A-312F extend above the housing surface 302A. In some embodiments, the external charger contacts 312A-312F are positioned below the housing surface 302A.

In some embodiments, the external charger contacts 312A and 312F are spring contacts and the external charger contacts 312B-312E are pogo contacts. In other embodiments, one or more of the external charger contacts 312B -312E are also spring contacts. Additionally, in other embodiments, all of the external charger contacts 312A-312F are pogo contacts. As another example, each of the external charger contacts 312A-312F can be spring contacts, in some embodiments. In other embodiments, one or more of the external charger contacts 312A and 312F are also spring contacts. In some embodiments, one or more of the external charger contacts 312A-312F are a different type of contact. In one example embodiment, external charger contacts 312A and 312F have a positive charge, the external charger contacts 312B and 312E have a negative charge, and the external charger contacts 312C and 312D are used for data communications with the battery pack or the user device.

FIG. 4A illustrates an example external view of battery pack 400A, and FIG. 4B illustrates an example internal view of battery pack 400B. The external view of battery pack 400A comprises battery pack housing 402, battery pack mechanical guide 406 for coupling the external view of battery pack 400A to the external charger (e.g., external charger 100 of FIG. 1), and external contact receivers 412A-412F. In embodiments, the battery pack housing 402 of FIGS. 4A-4B can support one or more cells (e.g., cell 403 of FIG. 4B), the mechanical guide 406, and the external contact receivers 412A-412F. The battery pack housing 402 can also support one or more magnets (e.g., magnets 504A-504F of FIG. 5) that are not illustrated in FIGS. 4A-4B, since the one or more magnets are positioned between the cell 403 and the external view of battery pack 400A.

In some embodiments, the battery pack housing 402 of FIG. 4A is configured around the mechanical guide 406, such that the mechanical guide 406 is exposed for receiving the mechanical guide of the external charger. In some embodiments, the battery pack housing 402 of FIG. 4A has an opening that exposes the mechanical guide 406. In embodiments, the mechanical guide 406 of external view of battery pack 400A is positioned below an exterior surface of the battery pack housing 402, such that the mechanical guide 406 is located at a closer distance, than the exterior surface of the battery pack housing 402, to the cell 403 of the internal view of battery pack 400B in FIG. 4B. In some embodiments, the mechanical guide 406 is rectangular and receives a corresponding rectangular mechanical guide of the external charger. In other embodiments, the mechanical guide 406 may have a different shape, such as an oval, for example. In some embodiments, the mechanical guide 406 includes one or more types of plastic (e.g., polycarbonate, acrylonitrile butadiene styrene, polypropylene, thermoplastic elastomer). In some embodiments, the mechanical guide 406, or a portion thereof, includes another material (e.g., stainless steel).

In some embodiments, the internal view of battery pack 400B in FIG. 4B includes one or more cells 403. In some embodiments, the battery pack 400B includes a plurality of cells that are in parallel or in a series. In some embodiments, the cell 403 is a lithium-ion cell, a lithium-polymer cell, or another type of cell. As illustrated in FIGS. 4A-4B, the external contact receivers 412A-412F can be positioned along and at a depth below a surface of the battery pack housing 402, such that the external contact receivers 412A-412F can each receive an external charger contact (e.g., external charger contacts 212A-212F of FIG. 2). In some embodiments, the external contact receivers 412A and 412F are capable of receiving a spring contact of the external charger. In some embodiments, the external contact receivers 412B -412E are capable of receiving a pogo contact of the external charger. In some embodiments, one or more of the external contact receivers 412A-412F are capable of receiving a pin contact, a blade contact, or another type of contact.

In some embodiments, external contact receivers 412A and 412F are capable of receiving an external charger contact having a positive polarity. In some embodiments, external contact receivers 412B and 412E are capable of receiving an external charger contact having a negative polarity. In embodiments, the charging process of the battery includes allowing current to flow from the external charger to the battery pack thorough one or more exposed and external contacts, wherein at least one of the exposed and external contacts is located on the external charger and at least one of the exposed and external contacts is located on the battery pack. To illustrate, the external contact on the battery pack is physically positioned on the battery pack (rather than on the user device). In some embodiments, external contact receivers 412C and 412D are capable of receiving or transmitting data between the battery pack or the user device and the external charger.

In some embodiments, external contact receivers 412A-412F correspond to an inter-integrated circuit protocol for communications over a bus or a one wire protocol for a data communication. In some embodiments, the distance between external contact receivers 412A and 412B is the same distance between external contact receivers 412B and 412C. In some embodiments, the distance between external contact receivers 412A and 412C is the same distance between external contact receivers 412F and 412D. In some embodiments, each of the external contact receivers 412A-412F have an equal distance with at least one other external contact receiver of the plurality of external contact receivers 412A-412F. Other embodiments of a battery pack may include more or less external charger contacts than the external contact receivers 412A-412F.

FIG. 5 illustrates an example internal view of battery pack 500. The internal view of battery pack 500 comprises battery pack housing 502, battery pack magnets 504A-504F, and protection circuit board 508 having a first side 508A and a second side 508B. In embodiments, the battery pack housing 502 can support the magnets 504A-504F and the protection circuit board 508. In some embodiments, the battery pack housing 502 can support more or less magnets than the magnets 504A-504F illustrated in example internal view of battery pack 500.

In embodiments, the protection circuit board 508 can include one or more of an overcharge protection circuit, an over-discharge protection circuit, an over-current protection circuit, a short-circuit protection circuit, a temperature protection circuit, another type of protection circuit, a battery gauge circuit or one or more combinations thereof. In embodiments, the battery pack 500 includes at least three magnets 504A, 504C, 504E positioned adjacent to the first side 508A of the protection circuit board 508. In embodiments, the battery pack 500 includes at least three magnets 504B, 504D, 504F positioned adjacent to the second side 508B of the protection circuit board 508. In some embodiments, the battery pack 500 includes one or more additional magnets positioned adjacent to one or more of the first side 508A and the second side 508B of the protection circuit board 508.

In some embodiments, the battery pack 500 has a first row of magnets 504A and 504B, a second row of magnets 504C and 504D, and a third row of magnets 504E and 504F. In embodiments, each of the rows of magnets aligns with at least one corresponding magnet of the external charger when the external contact receivers engage with the external charger contacts of the external charger, such that the aligned magnets of the battery pack and the external charger have opposite polarities. For example, the first row of magnets 504A and 504B may have a first polarity, the second row of magnets 504C and 504D may have a second polarity, and the third row of magnets 504E and 504F may have the first polarity. In embodiments, the first row of magnets 504A and 504B having the first polarity may align with a first row of magnets of the external charger that have the second polarity. In embodiments, the second row of magnets 504C and 504D having the second polarity may align with a second row of magnets of the external charger that have the first polarity. In embodiments, the third row of magnets 504E and 504F having the first polarity may align with a third row of magnets of the external charger that have the second polarity.

In some embodiments, a distance between first row of magnets 504A and 504B and the second row of magnets 504C and 504D is equal to the distance between the second row of magnets 504C and 504D and the third row of magnets 504E and 504F. In some embodiments, an additional row of magnets are positioned below the third row of magnets 504E and 504F. In addition, the distance between magnets 504A and 504B can be equal to the distance between magnets 504C and 504D. In some embodiments, the distance between magnets 504C and 504E is equal to the distance between magnets 504D and 504F. In some embodiments, a shape of one or more of the magnets 504A-504F is a different shape than illustrated in FIG. 5.

FIG. 6A illustrates a front view of a user device 600A and FIG. 6B illustrates a back view of user device 600B having a battery pack 601. In some embodiments, the battery pack 601 is removable from the user device 600B. As illustrated in FIG. 6B, the battery pack 601 includes a mechanical guide 606 and external contact receivers 612A-612F. In some embodiments, the battery pack 601 may include more or less of the external contact receivers 612A-612F illustrated in FIG. 6B. In some embodiments, one or more of the external contact receivers 612A-612F have a different shape than that depicted in FIG. 6B.

FIGS. 7A-7D illustrate example views 700A-700D of a user device coupled to an external charger via one or more magnets of the external charger, one or more corresponding magnets of the battery pack of the user device, one or more external charger contacts of the external charger, and one or more corresponding contact receivers of the battery pack. In embodiments, based on the external charger being coupled to the battery pack via the magnets, external charger contacts, and contact receivers, the battery pack of the user devices illustrated in views 700A-700D can be charged. For example, views 700A and 700C illustrate a frontward view of the user device being charged via the external charger, and views 700B and 700D illustrate backward views of the user device being charged via the external charger. As another example, views 700A and 700B illustrate the user device being charged in a first position and views 700C and 700D illustrate the user device being charged in a second position, wherein the first position and the second position are associated with the external charger. Stated differently, the external charger is capable of charging the battery pack in a first position and a second position. For instance, the external charger can rotated 180 degrees for coupling to the battery pack so that the battery pack can be charged in the first position and the second position, such that the external charger is rotated in the 180 degrees from the first position to the second position.

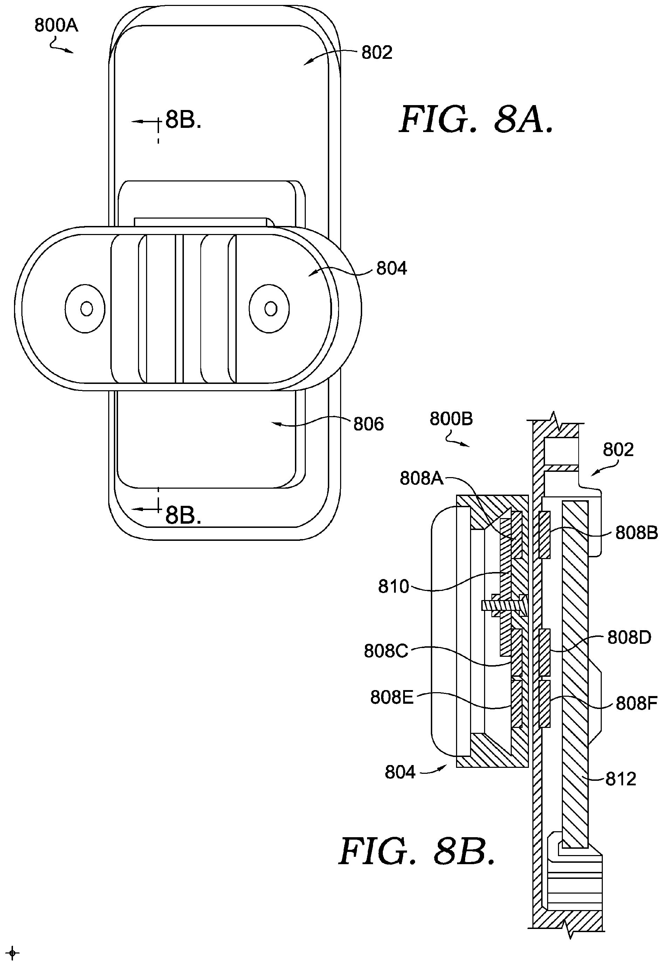

FIG. 8A illustrates a cross-section of the user device and external charger system 800A, and FIG. 8B illustrates a view of the system 800B from the cross-section. The system illustrated in FIGS. 8A-8B includes a user device 802, an external charger 804, and a battery pack 806, wherein the battery pack 806 is coupled to the external charger 804 via the external charger contacts (e.g., external charger contacts 212A-212F of FIG. 2), external contact receivers (e.g., external contact receivers 412A-412F of FIG. 4), magnets 808A, 808C, and 808E of the external charger 804, and magnets 808B, 808D, and 808F of the battery pack 806. FIG. 8B also illustrates the printed circuit board 810 of the external charger 804 and the cell 812 of the user device 802.

As illustrated in FIG. 8B, the printed circuit board 810 may be, in some embodiments, positioned behind (relative to the position of the battery pack 806 when the battery pack 806 is coupled to the external charger 804) and between the first magnet 808A (e.g. included within a first row of magnets within the external charger 804, wherein another magnet of the first row is not depicted) and the second magnet 808C (e.g. included within a second row of magnets within the external charger 804, wherein another magnet of the second row is not depicted) of the external charger 804. In some embodiments, the printed circuit board 810 may have a length (from the perspective of the cross-section corresponding to FIGS. 8A-8B) that is shorter than the distance from a furthest end of the first magnet 808A to a furthest end of the second magnet 808C of the external charger 804. In some embodiments, the magnets 808A and 808C of the external charger 804 are positioned at a distance that is closer to the printed circuit board 810 than a distance between the magnets 808B, 808D, and 808F of the battery pack 806 and the cell 812 of the user device 802.

In embodiments, a method for charging the user device 802 may include coupling the battery pack 806 to the external charger 804, such that an external contact receiver (e.g., one or more of external contact receivers 412A-412F of FIG. 4) of the battery pack 806 engages with the external charger contact (e.g., one or more of the external charger contacts 212A-212F of FIG. 2), and such that a plurality of rows of magnets (e.g., magnets 504A-504F of FIG. 5) within the battery pack 806 align with a plurality of rows of magnets (e.g., 204A-204B of FIG. 2) within the external charger 804, and wherein each aligned magnet of the battery pack 806 and the external charger 804 (e.g., aligned magnets 808A and 808B, aligned magnets 808C and 808D, aligned magnets 808E and 808F) have opposite polarities. For example, in some embodiments, the magnets 808A and 808E of the external charger 804 and the magnet 808D of the battery pack 806 have a first polarity, and the magnets 808B and 808F of the battery pack 806 and the magnet 808C of the external charger 804 have a second polarity. Based on the battery pack 806 being coupled to the external charger 804, the battery pack 806 can be charged.

In embodiments, one or more computer storage memory of the external charger 804, wherein the computer storage memory has computer-readable instructions stored thereon that, when executed by one or more processors of the external charger 804, cause the one or more processors to perform a method for charging the user device 802. For example, the method may include determining that the battery pack 806 has been coupled to the external charger 804 based on the external contact receiver (e.g., one or more of external contact receivers 412A-412F of FIG. 4) of the battery pack 806 engaging with the external charger contact (e.g., one or more of the external charger contacts 212A-212F of FIG. 2), wherein the battery pack 806 has been coupled to the external charger 804 via the magnets 808A-808F. Based on determining the battery pack 806 is coupled to the external charger 804, the one or more processors may cause the external charger 804 to charge the battery pack 806 (e.g., via one or more of the external contact receivers 412A-412F of FIG. 4 and one or more of the external charger contacts 212A-212F of FIG. 2).

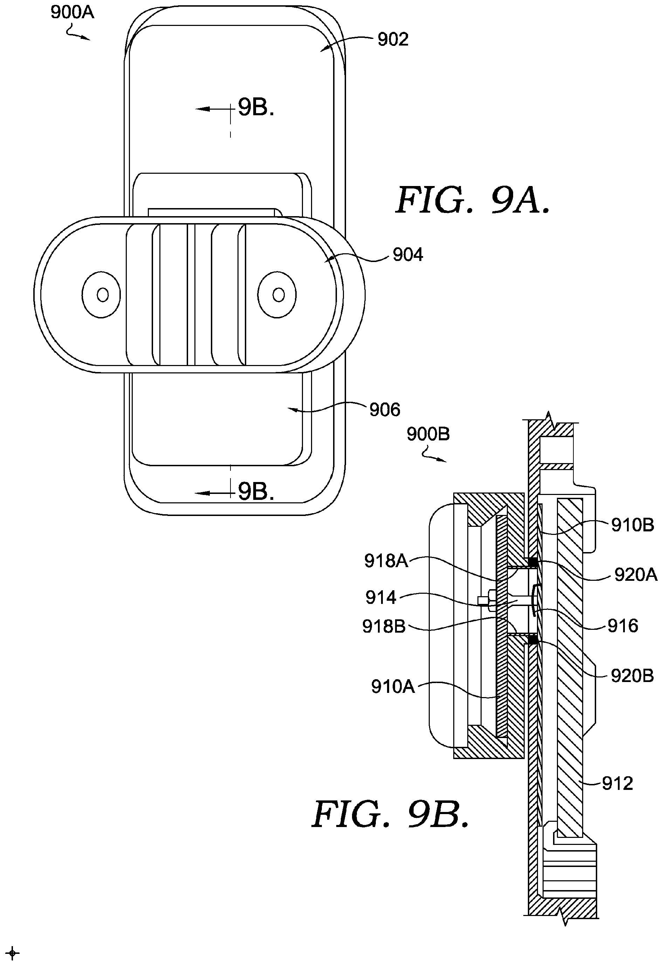

FIG. 9A illustrates a cross-section of the user device and external charger system 900A, and FIG. 9B illustrates a view of the system 900B from the cross-section. The system illustrated in FIGS. 9A-9B includes a user device 902, an external charger 904, and a battery pack 906, wherein the battery pack 906 is coupled to the external charger 904 via the external charger contact 914 of the external charger 904 and the external contact receiver 916 of the battery pack 906. FIG. 9B also illustrates the printed circuit board 910A of the external charger 904, the protective circuit board 910B of the battery pack 906, the cell 912 of the user device 902, two sides 918A-918B of the mechanical guide of the external charger 904, and two sides 920A-920B of the mechanical guide of the battery pack 906. In the example embodiment illustrated in FIG. 9B, the printed circuit board 910A of the external charger 904 has a longer length (from the perspective of the cross-section corresponding to FIGS. 9A-9B) than the printed circuit board 810 of the external charger 804 illustrated in FIG. 8B. (As such, in other embodiments of FIG. 8B, the printed circuit board 810 may have a length that is longer than the distance from a furthest end of the first magnet 808A to a furthest end of the second magnet 808C of the external charger 804.)

In embodiments, the external charger contact 914 of the external charger 904 is a pogo contact and the external contact receiver 916 of the battery pack 906 is a pad contact for receiving the external contact receiver 916. In embodiments, a method for charging the user device 902 may include coupling the battery pack 906 to the external charger 904, such that an external contact receiver 916 of the battery pack 906 engages with the external charger contact 914, and such that the magnets (e.g., magnets 808B, 808D, 808F of FIG. 8B) within the battery pack 906 align with the magnets (e.g., 808A, 808C, 808E of FIG. 8B) within the external charger 904. In some embodiments, the method further includes coupling the battery pack 906 to the external charger 904 by aligning the first side 918A of the mechanical guide of the external charger 904 with the first side 920A of the mechanical guide of the battery pack 906, and aligning the second side 918B of the mechanical guide of the external charger 904 with the second side 920B of the mechanical guide of the battery pack 906. Based on the battery pack 906 being coupled to the external charger 904, the battery pack 906 can be charged (e.g., via the external charger contact 914 and the external contact receiver 916).

In embodiments, one or more computer storage memory of the external charger 904, wherein the computer storage memory has computer-readable instructions stored thereon that, when executed by one or more processors of the external charger 904, cause the one or more processors to perform a method for charging the battery pack 906. For example, the method may include determining that the battery pack 906 has been coupled to the external charger 904 based on the external contact receiver 916 of the battery pack 906 engaging with the external charger contact 914. In some embodiments, the method performed by the one or more processors further includes determining that the first side 918A of the mechanical guide of the external charger 904 is engaged with the first side 920A of the mechanical guide of the battery pack 906. In some embodiments, the method performed by the one or more processors further includes determining that the second side 918B of the mechanical guide of the external charger 904 is engaged with the second side 920B of the mechanical guide of the battery pack 906. Based on determining the battery pack 906 is coupled to the external charger 904 (e.g., via the external charger contact 914, the external contact receiver 916, and via the two sides 918A-918B of the mechanical guide and two sides 920A-920B of the mechanical guide of the battery pack 906), the one or more processors may cause the external charger 904 to charge the battery pack 906 (e.g., via the external charger contact 914 and the external contact receiver 916).

FIG. 10 illustrates an example system 1000 including charger interface 1002 and battery pack interface 1012. The charger interface 1002 includes a first magnet 1004 having a first polarity 1004A and a second polarity 1004B, wherein the second polarity 1004B can interface with the first polarity 1014A of the first magnet 1014 of the battery pack interface 1012 (the first magnet 1014 also having the second polarity 1014B). The charger interface 1002 also includes a second magnet 1006 having the first polarity 1006A and the second polarity 1006B, wherein the second polarity 1006B can interface with the first polarity 1016A of the second magnet 1016 of the battery pack interface 1012 (the second magnet 1016 also having the second polarity 1016B). The charger interface 1002 also includes a third magnet 1008 having the first polarity 1008A and the second polarity 1008B, wherein the second polarity 1008B can interface with the first polarity 1018A of the third magnet 1018 of the battery pack interface 1012 (the third magnet 1018 also having the second polarity 1018B). The charger interface 1002 also includes an external charger contact 1010 for engaging with the external contact receiver 1020 of the battery pack interface 1012.

FIG. 11 illustrates another example system 1100 including charger interface 1102 and battery pack interface 1112. The charger interface 1102 includes a first magnet 1104 having a first polarity 1104A and a second polarity 1104B, wherein the second polarity 1104B can interface with the first polarity 1114A of the first magnet 1114 of the battery pack interface 1112 (the first magnet 1114 also having a second polarity 1114B). The charger interface 1102 also includes a second magnet 1106 having the second polarity 1106A and the first polarity 1106B, wherein the first polarity 1106B can interface with the second polarity 1116A of the second magnet 1116 of the battery pack interface 1112 (the second magnet 1116 also having the first polarity 1116B). The charger interface 1102 also includes a third magnet 1108 having the first polarity 1108A and the second polarity 1108B, wherein the second polarity 1108B can interface with the first polarity 1118A of the third magnet 1118 of the battery pack interface 1112 (the third magnet 1118 also having the second polarity 1118B). The charger interface 1102 also includes an external charger contact 1110 for engaging with the external contact receiver 1120 of the battery pack interface 1112.

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software. For instance, various functions may be carried out by a processor executing instructions stored in memory. As such, other arrangements and elements (for example, machines, interfaces, functions, orders, and groupings of functions, and the like) can be used in addition to, or instead of, those shown.

Embodiments of the present disclosure have been described with the intent to be illustrative rather than restrictive. Embodiments described in the paragraphs above may be combined with one or more of the specifically described alternatives. In particular, an embodiment that is claimed may contain a reference, in the alternative, to more than one other embodiment. The embodiment that is claimed may specify a further limitation of the subject matter claimed. Alternative embodiments will become apparent to readers of this disclosure after and because of reading it. Alternative means of implementing the aforementioned can be completed without departing from the scope of the claims below. Certain features and sub-combinations are of utility and may be employed without reference to other features and sub-combinations and are contemplated within the scope of the claims.

Many different arrangements of the various components depicted, as well as components not shown, are possible without departing from the scope of the claims below. Embodiments in this disclosure are described with the intent to be illustrative rather than restrictive. Alternative embodiments will become apparent to readers of this disclosure after and because of reading it. Alternative means of implementing the aforementioned can be completed without departing from the scope of the claims below. Certain features and subcombinations are of utility and may be employed without reference to other features and subcombinations and are contemplated within the scope of the claims.

In the preceding detailed description, reference is made to the accompanying drawings which form a part hereof wherein like numerals designate like parts throughout, and in which is shown, by way of illustration, embodiments that may be practiced. It is to be understood that other embodiments may be utilized and structural or logical changes may be made without departing from the scope of the present disclosure. Therefore, the preceding detailed description is not to be taken in the limiting sense, and the scope of embodiments is defined by the appended claims and their equivalents.

## Claims

1. A battery pack comprising:
one or more cells;
a protection circuit board;
an external contact receiver for receiving an external charger contact of an external charger; and
a housing for supporting the one or more cells, the protection circuit board, the external contact receiver, and the, wherein a first surface of the housing is capable of being coupled to the external charger.

2. The battery pack according to claim 1, comprising a plurality of rows of magnets, and wherein each of the plurality of rows of magnets aligns with at least one corresponding magnet of the external charger when the external charger contact engages with the external contact receiver, and wherein the aligned magnets of the battery pack and the external charger have opposite polarities.

3. The battery pack according to claim 2, wherein a distance between a first row of the plurality of rows of magnets and a second row of the plurality of rows of magnets is equal to the distance between the second row and a third row of the plurality of rows of magnets.

4. The battery pack according to any of previous claims, wherein the battery pack further includes a mechanical guide for coupling the battery pack to the external charger.

5. The battery pack according to claim 4, wherein the first surface of the housing has an opening that exposes the mechanical guide, and wherein the mechanical guide is below the first surface of the housing.

6. The battery pack according to any of previous claims, wherein the battery pack further includes a plurality of external contact receivers, including the external contact receiver, for engaging with external charger contacts of the external charger, wherein each of the plurality of external contact receivers has an equal distance with at least one other external contact receiver of the plurality of external contact receivers.

7. The battery pack according to claim 6, wherein the first surface of the housing has an opening that exposes the plurality of external contact receivers for engaging with the external charger contacts of the external charger.

8. The battery pack according to claim 7, wherein a first external contact receiver of the plurality of external contact receivers is capable of receiving a spring contact or a pogo contact.

9. An external charger comprising:
an input port for receiving an input voltage;
a printed circuit board with charging circuitry;
an external charger contact for engaging with an external contact receiver of a battery pack; and
a housing for supporting the input port, the printed circuit board with charging circuitry, the external charger contact.

10. The external charger according to claim 9, further comprising a plurality of rows of magnets, wherein each magnet aligns with at least one corresponding magnet of the battery pack when the external charger contact engages with the external contact receiver, and wherein the aligned magnets of the external charger and the battery pack have opposite polarities.

11. The external charger according to claim 9 or 10, wherein the external charger is capable of charging the battery pack in a first position and a second position.

12. The external charger according to claim 10, wherein a distance between a first row of the plurality of rows of magnets and a second row of the plurality of rows of magnets is equal to the distance between the second row and a third row of the plurality of rows of magnets.

13. The external charger according to claim 12, wherein the first row of the plurality of rows of magnets includes a first magnet adjacent to a first side of the printed circuit board and a second magnet adjacent to a second side of the printed circuit board, and wherein the first magnet and the second magnet have a first polarity for alignment with the battery pack.

14. The external charger according to claim 13, wherein the second row includes a third magnet adjacent to the first side of the printed circuit board and a fourth magnet adjacent to the second side of the printed circuit board, and wherein the third magnet and the fourth magnet have a second polarity for alignment with the battery pack that is opposite of the first polarity.

15. A method for charging a battery pack, the method comprising:
coupling the battery pack to an external charger, such that an external charger contact of the external charger engages with an external contact receiver of the battery pack; and
based on the battery pack being coupled to the external charger, charging the battery pack.
